# EUROPEAN PATENT APPLICATION

(11) **EP 4 708 058 A1**
(43) Date of publication of application: **11.03.2026**
(21) Application number: 24825127.4
(22) Date of filing: 30.05.2024
(51) Int. Cl.: G06F 12/0811

(54) **CACHE STRUCTURE AND ELECTRONIC DEVICE**

(30) Priority: 20.06.2023 CN 202310740144
(71) Applicant: Hygon Information Technology Co., Ltd., Tianjin 300392 (CN)
(72) Inventor: CHEN, Qing, Tianjin 300392 (CN); YUAN, Qing, Tianjin 300392 (CN); HUA, Rui, Tianjin 300392 (CN); YANG, Yu, Tianjin 300392 (CN); RONG, Guangjian, Tianjin 300392 (CN); LIU, Yang, Tianjin 300392 (CN); XIAO, Haodong, Tianjin 300392 (CN); PAN, Yu, Tianjin 300392 (CN)
(74) Representative: EIP
(86) International application number: PCT/CN2024/096241
(87) International publication number: WO 2024/260231

(57) **Abstract**

A cache structure and an electronic device. The cache structure comprises an N-level cache, an ith-level cache in the N-level cache comprises at least one i-level cache node, and each i-level cache node comprises an i-level read-only cache region with a read-only permission and an i-level read-write cache region with a read-write permission. Each plurality of i-level cache nodes share one (i+1)-level cache node. An Nth-level cache is electrically connected to an external memory, and each level-1 cache node is electrically connected to a corresponding computing unit. The read-only cache region in the N-level cache is configured to cache an input matrix as a computing input parameter in matrix computing, and to transmit the input matrix between the external memory and a plurality of computing units. The read-write cache region in the N-level cache is configured to cache an output matrix as a computing output parameter in matrix computing, and to transmit the output matrix between the external memory and the plurality of computing units.

## Description

The present application claims the priority of Chinese Patent Application No. 202310740144.X filed on Jun. 20, 2023, which is hereby incorporated by reference in its entirety as part of the present application.

### TECHNICAL FIELD

Embodiments of the present disclosure relate to a cache structure and an electronic device.

### BACKGROUND

A working speed of a processor is much higher than that of a memory. If the processor directly accesses the memory to read and write data, it needs to wait for a certain period of time. Therefore, a Cache is usually used to improve the system efficiency and the speed of the processor accessing the memory. Generally, the processor preferentially searches data from the Cache, for example, if data requested by an application or software exists in the Cache, it is called a Cache hit (Cache hit), and otherwise, it is called a Cache miss (Cache miss).

### SUMMARY

At least one embodiment of this disclosure provides a cache structure used for matrix computation, and the cache structure comprises N levels of caches, an ith-level cache among the N levels of caches comprises at least one level-i cache node, and each level-i cache node comprises a level-i read-only cache region with a read-only permission and a level-i read-write cache region with a read-write permission; every a plurality of level-i cache nodes share one level-(i+1) cache node, and all level-(N-1) cache nodes share one level-N cache node comprised in an Nth-level cache among the N levels of caches, wherein the level-N cache node comprises a level-N read-only cache region with a read-only permission and a level-N read-write cache region with a read-write permission; the Nth-level cache is electrically connected to an external memory, and each level-1 cache node is electrically connected to a corresponding computing unit; a read-only cache region with the read-only permission in the N levels of caches is used for caching an input matrix as a computation input parameter in the matrix computation, and transmitting the input matrix between the external memory and a plurality of computing units, a read-write cache region with the read-write permission in the N levels of caches is used for caching an output matrix as a computation output parameter in the matrix computation, and transmitting the output matrix between the external memory and the plurality of computing units, wherein N is a positive integer greater than 1, and i is any positive integer between 1 and N-1.

For example, in the cache structure provided in at least one embodiment of the present disclosure, each computing unit comprises an operation module and a register array, the register array of each computing unit is used for storing a part of parameters in the input matrix and a part of parameters in the output matrix; and the operation module of each computing unit comprises a plurality of multipliers and/or multiply-adders which are used for performing multiplication computation and/or multiplication and addition computation in parallel.

For example, in the cache structure provided in at least one embodiment of the present disclosure, the matrix computation comprises matrix multiplication computation and/or matrix multiplication and addition computation.

For example, in the cache structure provided in at least one embodiment of the present disclosure, the input matrix as the computation input parameter is read into a register array in a corresponding computing unit through a read-only cache path composed of read-only cache regions with the read-only permission in the N levels of caches, and the output matrix as the computation output parameter is read into a register array in a corresponding computing unit through a read-write cache path composed of read-write cache regions with the read-write permission in the N levels of caches, an updated output matrix is obtained after computation by an operation module in the corresponding computing unit, and the updated output matrix is written back from the corresponding computing unit to the external memory or a read-write cache region of any level of cache through the read-write cache path.

For example, in the cache structure provided in at least one embodiment of the present disclosure, in response to N being 3, the read-only cache path comprises a read-only cache region in a level-1 cache node corresponding to the corresponding computing unit, a read-only cache region in a level-2 cache node electrically connected to the level-1 cache node, and a read-only cache region in a level-3 cache node; and the read-write cache path comprises a read-write cache region in the level-1 cache node corresponding to the corresponding computing unit, a read-write cache region in the level-2 cache node electrically connected to the level-1 cache node, and a read-write cache region in the level-3 cache node.

For example, in the cache structure provided in at least one embodiment of the present disclosure, the external memory is a dynamic random-access memory.

At least one embodiment of this disclosure also provides an electronic device, and the electronic device comprises a cache structure as described in any embodiment of the present disclosure.

For example, in the electronic device provided in at least one embodiment of the present disclosure, the electronic device comprises N levels of task distribution units corresponding to the N levels of caches one by one and N levels of thread groups corresponding to the N levels of caches one by one, each level of task distribution units comprises at least one task distribution unit, and each level of thread groups comprises at least one thread group, a number of j*th*-level task distribution units located at a j*th*-level among the N levels of task distribution units is the same as a number of level-j cache nodes comprised in a corresponding j*th*-level cache among the N levels of caches, and the j*th*-level task distribution units correspond to the level-j cache nodes one by one, a number of level-j thread groups located at a j*th*-level among the N levels of thread groups is the same as the number of level-j cache nodes comprised in the corresponding j*th-*level cache among the N levels of caches, and the level-j thread groups correspond to the level-j cache nodes one by one, and threads comprised in each level-j thread group share a corresponding level-j cache node to cache data, wherein j is a positive integer less than or equal to N.

For example, in the electronic device provided in at least one embodiment of the present disclosure, a number of Nth-level task distribution unit located at an Nth-level among the N levels of task distribution units is 1, and the Nth-level task distribution unit is configured to split a total task used for the matrix computation into P1 first tasks and respectively distribute the P1 first tasks to P1 level-N thread groups for time sharing execution, and P1 is a positive integer.

For example, in the electronic device provided in at least one embodiment of the present disclosure, the electronic device is configured to execute a first task corresponding to one level-N thread group within one operation cycle.

For example, in the electronic device provided in at least one embodiment of the present disclosure, the electronic device is configured to: read parameters of an input matrix required for executing a plurality of first tasks among the P1 first tasks to the level-N cache nodes at one time, and schedule the plurality of computing units to finish executing the plurality of first tasks within a plurality of operation cycles.

For example, in the electronic device provided in at least one embodiment of the present disclosure, the Nth-level task distribution unit is further configured to select at least one first task, split each first task into P2 second tasks to obtain P2 level-(N-1) thread groups split from a level-N thread group corresponding to each first task, and distribute the P2 level-(N-1) thread groups to P2 (N-1)*th*-level task distribution units, wherein P2 is a number of level-(N-1) cache nodes.

For example, in the electronic device provided in at least one embodiment of the present disclosure, each k*th*-level task distribution unit is configured to split a received level-k thread group distributed by a (k+1)*th*-level task distribution unit into P3 level-(k-1) thread groups and distribute the P3 level-(k-1) thread groups to corresponding P3 (k-1)*th*-level task distribution units, wherein P3 is a number of level-(k-1) cache nodes sharing one level-k cache node, the corresponding P3 (k-1)*th*-level task distribution units are P3 (k-1)*th*-level task distribution units corresponding to P3 level-(k-1) cache nodes one by one, and the P3 level-(k-1) cache nodes share a level-k cache node corresponding to the k*th*-level task distribution unit, wherein k is a positive integer greater than 1 and less than N.

For example, in the electronic device provided in at least one embodiment of the present disclosure, each first level task distribution unit is configured to distribute a received level-1 thread group to a corresponding level-1 cache node to execute a matrix computation task by using a computing unit corresponding to the corresponding level-1 cache node.

For example, in the electronic device provided in at least one embodiment of the present disclosure, a number of threads comprised in the level-N thread group is determined by a number of level-1 cache nodes and a number of tasks executable by each computing unit in parallel; a total number of threads comprised in each level-k thread group is equal to a sum of numbers of threads comprised in P3 level-(k-1) thread groups; and a total number of threads comprised in each level-1 thread group is equal to the number of tasks executable by the computing unit in parallel.

For example, in the electronic device provided in at least one embodiment of the present disclosure, each task distribution unit is configured to split a thread group according to data correlation between parameters of the input matrix.

For example, in the electronic device provided in at least one embodiment of the present disclosure, for a plurality of level-(j-1) thread groups obtained by splitting according to the data correlation between the parameters of the input matrix, parameters of the input matrix cached in a read-only cache region with the read-only permission in a level-j cache node are able to reuse by a plurality of level-(j-1) cache nodes, and the plurality of level-(j-1) cache nodes share the level-j cache node and correspond to the plurality of level-(j-1) thread groups.

### BRIEF DESCRIPTION OF DRAWINGS

In order to provide a clearer explanation of the technical solution of embodiments in the present disclosure, a brief introduction will be given to the accompanying drawings of the embodiments. It is obvious that the accompanying drawings described below only relate to some embodiments of the present disclosure, and do not limit the present disclosure.
Fig. 1 is a schematic structural diagram of a multi-core system-on-chip;
Fig. 2 is a schematic structural diagram of a cache structure provided by at least one embodiment of the present disclosure;
Fig. 3 is a schematic structural diagram of an electronic device provided by at least one embodiment of the present disclosure;
Fig. 4 is a schematic block diagram of N levels of task distribution units provided by at least one embodiment of the present disclosure;
Fig. 5 is a schematic structural diagram of hierarchical thread groups provided by at least one embodiment of the present disclosure; and
Fig. 6 is a schematic diagram of a thread group splitting relationship provided by an embodiment of the present disclosure.

### DETAILED DESCRIPTION

In order to make the purpose, technical solution, and advantages of embodiments of the present disclosure clearer, the following will provide a clear and complete description of the technical solution of embodiments of the present disclosure in conjunction with the accompanying drawings. Obviously, the described embodiments are a part of the embodiments of the present disclosure, not the entire embodiments. Based on the described embodiments of the present disclosure, all other embodiments obtained by ordinary skilled persons in the art without the need for creative labor are within the scope of protection of this disclosure.

Unless otherwise defined, the technical or scientific terms used in this disclosure shall have the usual meanings as understood by persons with general skills in the field to which this disclosure belongs. The terms "first", "second", and similar words used in this disclosure do not indicate any order, quantity, or importance, but are only used to distinguish different components. Words such as' including 'or' containing 'refer to the elements or objects that appear before the word, including those listed after the word and their equivalents, without excluding other elements or objects. Words like 'connection' or 'connection' are not limited to physical or mechanical connections, but can include electrical connections, whether direct or indirect. Up, down, left, right, etc. are only used to represent relative positional relationships. When the absolute position of the described object changes, the relative positional relationship may also change accordingly.

In order to maintain clarity and conciseness in the following description of the disclosed embodiments, detailed explanations of some known functions and components have been omitted in this disclosure.

Computers usually include a main memory and a cache. Processors (a processing kernel of a single-core CPU, a multi-core CPU, or a GPU (Graphic Processing Unit), etc.) have slower access speed to the main memory than to the cache, so that the cache can be used to make up for the slow access speed of the main memory, thereby increasing the memory access speed. The cache is usually integrated in the processor.

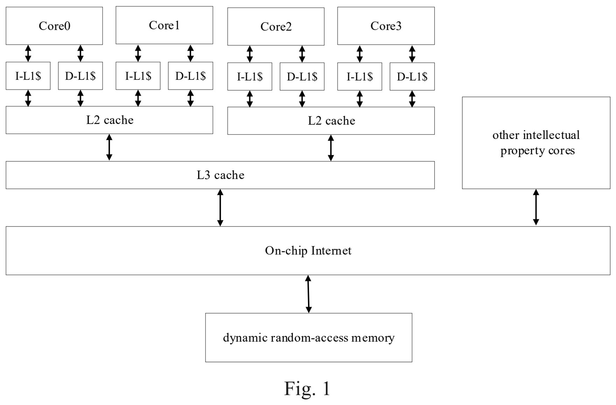

Fig. 1 is a schematic structural diagram of a multi-core system-on-chip. As shown in Fig. 1, the multi-core system-on-chip is a typical 4-core system-on-chip, including 4 cores, three levels of caches (a L1 cache, a L2 cache and a L3 cache) corresponding to the 4 cores, the on-chip Internet, a dynamic random-access memory and other intellectual property cores. I-L1$ is a private instruction L1 cache of each core, and D-L1$ is a private data L1 cache of each core. Every two cores share one L2 cache and four cores share the L3 cache. The L3 cache and other intellectual property cores (for example, direct memory access/video/display, etc.) access the dynamic random-access memory through the on-chip Internet.

The L1 cache is the closest to the core, with a smallest capacity and a highest speed.

The L2 cache has a larger capacity, such as 256K, which is slower than the L1 cache. The L2 cache can be understood as a buffer of the L1 cache. The L1 cache is very high in manufacturing cost, so its capacity is limited. A function of the L2 cache is to store data needed by the processor during processing, but cannot be stored by the L1 cache.

The L3 cache has the largest capacity (for example, 12MB), and the slowest access speed, among the three levels of caches. The L3 cache and the dynamic random-access memory can be regarded as buffers of the L2 cache. The capacities of the L1 cache to the L3 cache gradually increase, but the unit manufacturing costs gradually decrease.

When the processor is running, it first goes to the L1 cache to search data it needs, if the data misses, it goes to the L2 cache to search the data, and if the data still misses, it goes to the L3 cache to search the data. If data needed by the processor is not searched in the three levels of caches, the data is acquired from the dynamic random-access memory. The longer a search path is, the more time it consumes.

Similarly, the cache in a GPU also has a cache structure similar to that of the multi-core system-on-chip shown in Fig. 1, for example, it also includes a hierarchical three-level cache structure, which is omitted here.

For example, matrix computation may include matrix multiplication computation and/or matrix multiplication and addition computation. For the matrix multiplication computation: C(M, N) = A(M, K) × B(K, N), it means that an output matrix C (M rows × N columns) is obtained by multiplying an input matrix A (M rows × K columns) by an input matrix B (K rows × N columns). For example, for the matrix multiplication and addition computation: C'(M, N) = A(M, K) × B(K, N)+ C(M, N), it means that a result of multiplying an input matrix A(M rows × K columns) by an input matrix B (K rows × N columns) is added to a current value C of an output matrix (M rows × N columns) to obtain the updated output matrix C'.

For the matrix multiplication computation or the matrix multiplication and addition computation, the read-write characteristics of the input matrix A and the input matrix B are read-only, that is, when performing the matrix computation, parameters of the input matrix A and the input matrix B can be read from an external memory, such as a dynamic random-access memory, into a computing unit in a Core or GPU architecture through three levels of caches to perform computation, and the parameters of the input matrix A and the input matrix B in the external memory will not be rewritten. The read-write characteristics of the output matrix C (and C') are read-write, that is, when performing the matrix computation, parameters of the output matrix C are read from the external memory into the computing unit in the Core or GPU architecture through the three levels of caches to perform computation, and the computation result C' needs to be sent back to the external memory again to update or rewrite previously stored parameters of the output matrix C.

At present, in the processor, the L1 cache, the L2 cache and the L3 cache are all caches with read-write permissions. With respect to the above matrix computation, a size of the matrix may be very large, for example, M and N are large, and at this time, the requirement on the cache capacity is relatively high, so that the cache occupies a relatively large area; moreover, due to the fact that the size of the chip is increased and matrix computation is carried out through a read-write cache, a delay of data handling is large, the design complexity is high, and the power consumption is large.

At least one embodiment of the present disclosure provides a cache structure and an electronic device. The cache structure is used for matrix computation, where the cache structure includes N levels of caches, an i*th*-level cache among the N levels of caches comprises at least one level-i cache node, and each level-i cache node comprises a level-i read-only cache region with a read-only permission and a level-i read-write cache region with a read-write permission;every a plurality of level-i cache nodes share one level-(i+1) cache node, and all level-(N-1) cache nodes share one level-N cache node comprised in an N*th-*level cache among the N levels of caches, wherein the level-N cache node comprises a level-N read-only cache region with a read-only permission and a level-N read-write cache region with a read-write permission;the N*th-*level cache is electrically connected to an external memory, and each level-1 cache node is electrically connected to a corresponding computing unit;a read-only cache region with the read-only permission in the N levels of caches is used for caching an input matrix as a computation input parameter in the matrix computation, and transmitting the input matrix between the external memory and a plurality of computing units,a read-write cache region with the read-write permission in the N levels of caches is used for caching an output matrix as a computation output parameter in the matrix computation, and transmitting the output matrix between the external memory and the plurality of computing units,where N is a positive integer greater than 1, and i is any positive integer between 1 and N-1.

The cache structure is optimized for matrix computation. The cache structure has the read-only cache region and the read-write cache region which are separated, the read-only cache region with the read-only permission transmits and caches the input matrix, and the read-write cache region with the read-write permission transmits and caches the output matrix. Read-only data accounts for a higher proportion in all levels of caches compared with read-write data, and the read-only cache region has relatively low design complexity, small occupied area and low power consumption, therefore, the cache structure can effectively reduce the hardware cost and complexity of cache design and the occupied area.

The cache structure of the embodiment of the present disclosure can be used in a single-core CPU or a multi-core CPU, and can also be used in a GPU and a GPGPU, which is not specifically limited by the present disclosure.

Embodiments of the present disclosure will be described in detail with reference to the accompanying drawings, but the present disclosure is not limited to these specific embodiments.

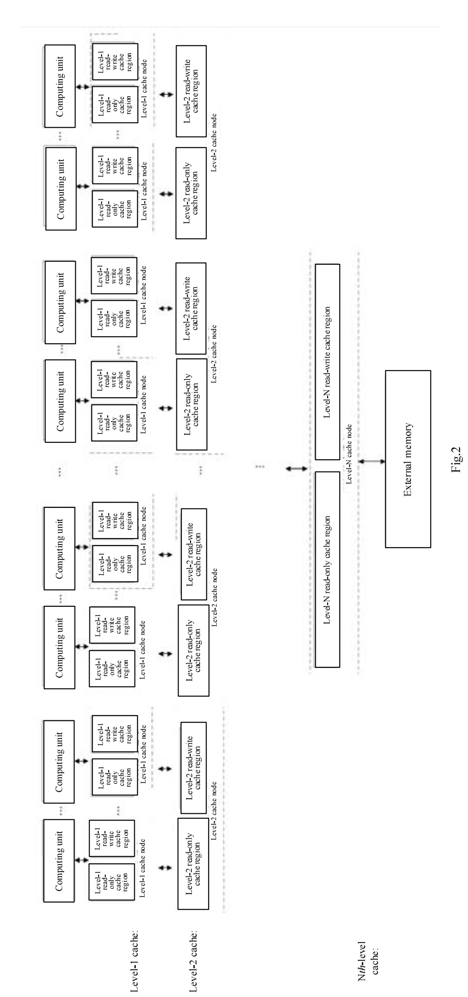

Fig. 2 is a schematic structural diagram of a cache structure provided by at least one embodiment of the present disclosure.

As shown in Fig. 2, the cache structure includes N levels of caches. In Fig. 2, specific structures of a level-1 cache, a level-2 cache and a level-N cache are shown, and the structures of other levels of cache are similar, which are omitted here.

For example, an ith-level cache among the N levels of caches includes at least one level-i cache node, and each level-i cache node includes a level-i read-only cache region with a read-only permission and an level-i read-write cache region with a read-write permission. Here, i is any positive integer between 1 and N-1.

For example, as shown in Fig. 2, when i=1, for a level-1 cache (1st-level), it includes multiple level-1 cache nodes, and each level-1 cache node includes one level-1 read-only cache region and one level-1 read-write cache region. When i=2, for a level-2 cache (2*nd*-level), it includes multiple level-2 cache nodes, and each level-2 cache node includes one level-2 read-only cache region and one level-2 read-write cache region.

For example, as shown in Fig. 2, an N*th*-level cache among the N levels of caches includes one level-N cache node, and the level-N cache node includes one level-N read-only cache region with a read-only permission and a level-N read-write cache region with a read-write permission.

For example, every multiple level-i cache nodes share one level- (i+1) cache node, and all level-(N-1) cache nodes share the level-N cache node. Sharing here means that the multiple (for example, M) level-i cache nodes are electrically connected to the level- (i+1) cache node, and all the M level-i cache nodes can exchange data with the level- (i+1) cache node, for example, acquire required data from the level- (i+1) cache node.

For example, as shown in Fig. 2, multiple level-1 cache nodes share one level-2 cache node, multiple level-2 cache nodes share one level-3 cache node, and all level-(N-1) cache nodes share the level-N cache node.

For example, at each level, the number of cache nodes that share one higher level cache node can be set as required, and the number can be different for each level, which is not specifically limited by the present disclosure. For example, in response to N=4, it can be set that every 4 level-1 cache nodes share one level-2 cache node, every 8 level-2 cache nodes share one level-3 cache node, and all level-3 cache nodes share a level-4 cache node.

For example, as shown in Fig. 2, the N*th*-level cache is electrically connected to an external memory, for example, the external memory can be a dynamic random-access memory.

For example, as shown in Fig. 2, each level-1 cache node is electrically connected to the corresponding computing unit.

For example, the computing unit may be a Core, or, in the GPU architecture, the computing unit may include an operation module and a register array.

For example, each register array is used for storing a part of parameters in the input matrix and a part of parameters in the output matrix, and the stored parts of the parameters are determined according to the operation required to be executed by the operation module in the computing unit. For example, for a large-scale matrix multiplication and addition computation task, it is assumed that each operation module has 4 threads (for example, 4 multiply-adders) and can concurrently process the computation of C'(2×2)=C(2×2)+A(2×1)×B(1×2) in each operation cycle, so that each computing unit stores the parameters A(2×1) (2 rows × 1 column) and B(1×2) (1 row × 2 columns) required for its own computation in the register array, and at the same time caches C'(2×2) (2 rows × 2 columns) and/or C(2×2) in the register array.

The operation module of each computing unit includes a plurality of multipliers and/or multiply-adders which are used for performing multiplication computation and/or multiplication and addition computation in parallel. For example, 1 operation module may include 4 threads, such as 4 multipliers or 4 multiply-adders, and may perform 4 computation tasks in parallel, such as 4 sets of multiplication computation or multiplication and addition computation in parallel.

For example, the read-only cache region with the read-only permission in the level-N cache is used for caching an input matrix as a computation input parameter in the matrix computation, and transmitting the input matrix between the external memory and a plurality of the computing units. For example, the read-write cache region with the read-write permission in the level-N cache is used for caching an output matrix as a computation output parameter in the matrix computation, and transmitting the output matrix between the external memory and the plurality of computing units.

For example, the matrix computation includes matrix multiplication computation and/or matrix multiplication and addition computation. In response to the matrix multiplication computation expressed as C=A×B, and in response to matrix multiplication and addition computation expressed as C'=A×B+C, A and B represent input matrices as computation input parameters, and C and C' represent output matrices as computation output parameters, where C represents a current value of the output matrix, that is, a result of the last multiplication and addition computation, and C' represents a value of the output matrix updated after this multiplication and addition computation.

For example, the input matrix A and the input matrix B as the computation input parameters are read into the register array in the corresponding computing unit through a read-only cache path composed of the read-only cache regions with the read-only permission in the level-N cache.

For example, as shown in Fig. 2, for any computing unit, parameters of the input matrix (for example, input matrices A and B) required for performing the matrix computation are first searched from the level-1 read-only cache region (for example, a level-1 read-only cache region 1) in the level-1 cache node electrically connected to the computing unit; if these parameters miss, the parameters are searched from the read-only cache region (for example, a level-2 read-only cache region 1) in the level-2 cache node electrically connected to the level-1 cache node; if these parameters still miss, the parameters are searched from the read-only cache region of a level-3 cache node electrically connected to the level-2 cache node (for example, a level-3 read-only cache region 1); and if these parameters miss till the level-N cache node, the parameters are read from the external memory and read into the register array in the computing unit through the read-only cache path composed of the level-N cache node, ..., the level-3 read-only cache region 1, the level-2 read-only cache region 1 and the level-1 read-only cache region 1.

For example, if the required parameters are hit in the read-only cache region of the level-2 cache node, the parameters can be read from the read-only cache region of the level-2 cache node and read into the register array in the computing unit through the level-2 read-only cache region 1 and the level-1 read-only cache region 1 in the read-only cache path.

For example, the output matrix C as the computation output parameter is read into the register array in the corresponding computing unit through a read-write cache path composed of the read-write cache regions with the read-write permissions in the level-N cache, an updated output matrix C' is obtained after computation by the operation module in the corresponding computing unit, and the updated output matrix C' is written from the corresponding computing unit back to the external memory or the read-write cache region of a certain level cache through the read-write cache path.

For example, as shown in Fig. 2, for any computing unit, in response to the matrix multiplication and addition computation, the parameters of the output matrix (for example, a current value C of the output matrix) required for performing the matrix computation by the computing unit are first searched from the level-1 read-write cache region (for example, a level-1 read-write cache region 1) in the level-1 cache node electrically connected to the computing unit; if these parameters miss, the parameters are searched from the read-write cache region (for example, a level-2 read-write cache region 1) in the level-2 cache node electrically connected to the level-1 cache node; if these parameters miss, the parameters are searched from the read-write cache region of the level-3 cache node electrically connected to the level-2 cache node (for example, a level-3 read-write cache region 1); and if these parameters miss till the level-N cache node, the parameters are read from the external memory and read into the register array in the computing unit through the read-write cache path composed of the level-N cache node, ..., the level-3 read-write cache region 1, the level-2 read-write cache region 1 and the level-1 read-write cache region 1.

Then, the operation module in the computing unit completes the multiplication and addition computation to obtain the updated output matrix C', and the updated output matrix C' is written from the corresponding computing unit back to the external memory and the read-write cache region of any level of cache through the read-write cache path composed of the level-1 read-write cache region 1, the level-2 read-write cache region 1, the level-3 read-write cache region 1, ..., and the level-N cache nodes.

For example, by taking a level-3 cache structure as an example, that is, in response to N being 3, the level-1 cache includes a plurality of level-1 cache nodes, each level-1 cache node includes one level-1 read-only cache region and one level-1 read-write cache region, and each level-1 cache node corresponds to one computing unit and is electrically connected to the computing unit; the level-2 cache includes a plurality of level-2 cache nodes, each level-2 cache node includes one level-2 read-only cache region and one level-2 read-write cache region, and every M (e.g. 2, 4, 8, etc.) level-1 cache nodes share one level-2 cache node, that is, the M level-1 cache nodes are electrically connected to the level-2 cache node; the level-3 cache includes one level-3 cache node, the level-3 cache node includes one level-3 read-only cache region and one level-3 read-write cache region, all level-2 cache nodes share the level-3 cache node, that is, all level-2 cache nodes are electrically connected to the level-3 cache node, and the level-3 cache node is electrically connected to an external memory.

For example, the read-only cache path includes a read-only cache region in a level-1 cache node corresponding to the corresponding computing unit, a read-only cache region in a level-2 cache node electrically connected to the level-1 cache node, and a read-only cache region in a level-3 cache node; and the read-write cache path includes a read-write cache region in the level-1 cache node corresponding to the corresponding computing unit, a read-write cache region in the level-2 cache node electrically connected to the level-1 cache node, and a read-write cache region in the level-3 cache node.

For example, the input matrix A and the input matrix B are read into the register array of the corresponding computing unit from the external memory or the read-only cache region of a certain level cache through the read-only cache path, and the output matrix C is read into the register array of the corresponding computing unit from the external memory or the read-write cache region of a certain level cache through the read-write cache path, and after the operation module completes the computation of C'=A×B+C, the updated output matrix C' is written back to the read-write cache region of a certain level cache or the external memory through the read-write cache path.

For example, in one embodiment, taking the input matrix A, the input matrix B, and the output matrices C and C' with sizes of 256×256 and precision of INT8 (the data volume is 1 byte) to implement the matrix multiplication and addition computation (C'=C+A×B) as an example, it is assumed that each computing unit has 4 threads (or 4 multiply-adders) and can concurrently process C'(2×2)=C(2×2)+ A (2×1)×B(1×2) within each operation cycle, here, A(2×1) represents parameters of 2 rows × 1 column in the input matrix A, B(1×2) represents parameters of 1 row × 2 columns in the input matrix B, C(2×2) represents a current value of 2 rows × 2 columns corresponding to A(2×1)×B(1×2) obtained by the last multiplication and addition computation of the output matrix C, and C'(2×2) represents an updated result of this multiplication and addition computation.

For example, a total of 64 level-1 cache nodes are provided in the cache structure, every 4 level-1 cache nodes share one level-2 cache node, and 16 level-2 cache nodes share one level-3 cache node.

For example, if a delay of data handling from the level-1 cache node to the computing unit is 8 clock cycles, a delay of data handling from the level-2 cache node (via the level-1 cache node) to the computing unit is 32 clock cycles, and a delay of data handling from the level-3 cache node (via the level-1 cache node and the level-2 cache node) to the computing unit is 64 clock cycles, then a volume of data stored in each level-1 cache node is as follows:
8 sets of A(2×1) and B(1×2) are stored in the level-1 read-only cache region, that is, 8×(2×1+1×2)×1 bytes = 32 bytes;
1 set of C(2×2) is stored in the level-1 read-write cache region, that is, 1×2×2×1 bytes = 4 bytes.

Therefore, a ratio of the volume of data in the level-1 read-only cache region to the volume of data in the level-1 read-write cache region is 8:1.

32 sets of A(4× 1) and B(1×4) are stored in the level-2 read-only cache region, that is, 32×(4× 1+1×4)× 1 bytes = 256 bytes, and 1 set of C(4×4) is stored in the level-2 read-write cache region, that is, 1 ×4×4× 1 bytes = 16 bytes. Therefore, a ratio of the volume of data in the level-2 read-only cache region to the volume of data in the level-2 read-write cache region is 16:1.

64 sets of A(16×1) and B(1×16) are stored in the level-3 read-only cache region, that is, 64×(16x1+1x16)×1 bytes = 2048 bytes, and 1 set of C(16×16) is stored in the level-3 read-write cache region, that is, 16×16 × 1bytes = 256 bytes. Therefore, a ratio of the volume of data in the level-3 read-only cache region to the volume of data in the level-3 read-write cache region is 8:1.

It can be seen from the proportional relationship that read-only data accounts for a higher proportion compared with read-write data, and this is related to the matrix size and the delay of data handling involved in the operation, and is related to the computing capacity (computing hardware resources) of the computing unit. The sizes of the input matrix A and the input matrix B and the delay of data handling determine the size of read-only data; and the computing capacity of the computing unit determines the size of read-write data. Since the hardware resources of the computing unit are always limited, the size of read-write data is limited. However, since the sizes of input matrix A and input matrix B may be very large according to the application requirements and the delay of data handling is also increasing with the increase of a chip size, the cache capacity for storing the input matrix A and the input matrix B will be relatively large. Therefore, according to the read-only characteristics of the input matrix A and the input matrix B, by designing the cache for storing the input matrix A and the input matrix B as a read-only cache, the complexity of the cache design, the hardware overhead and the area occupied by the cache structure can be effectively reduced.

In the cache structure provided by at least one embodiment of the present disclosure, a read-write and read-only separated cache structure is designed, which is more friendly for matrix computation. In the matrix computation, the input matrix is read-only, and the output matrix is read-write, so that data of the input matrix is cached in the read-only cache regions of various levels of caches, and data of the output matrix is cached in the read-write cache regions of various levels of caches. Since read-only data accounts for a high proportion compared with read-write data, this setting method can save the area occupied by the cache structure. Moreover, since the design complexity and the power consumption of the read-only cache region are low, the design complexity and the power consumption of the cache structure can be reduced as a whole. Especially when the size of the input matrix is large, since the input matrix and the output matrix are stored in different cache regions and are independent of each other and will not interfere with each other, when the parameters of the input matrices A and B are read, the parameters of the output matrix C will not be washed away, which reduces the delay caused by data handling, reduces the hardware overhead and improves the computing efficiency.

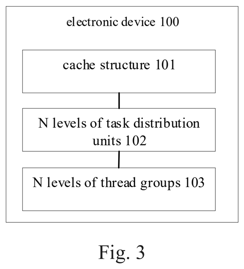

At least one embodiment of the present disclosure also provides an electronic device. Fig. 3 is a schematic structural diagram of an electronic device provided by at least one embodiment of the present disclosure.

As shown in Fig. 3, the electronic device 100 includes a cache structure 101 according to any of embodiments of the present disclosure. The structure, functions and technical effects of the cache structure 101 are as described above, which are omitted here.

As shown in Fig. 3, the electronic device 100 also includes N levels of task distribution units 102 corresponding to N levels of caches one by one and N levels of thread groups 103 corresponding to the N levels of caches one by one.

For example, each level of task distribution units includes at least one task distribution unit, and each level of thread groups includes at least one thread group.

For example, the thread group refers to a group of threads combined together, and all threads in each thread group execute the same instruction, but each thread reads and writes private data of the thread.

For example, the task distribution unit may be implemented in hardware, for example, by a special hardware structure, or in software, for example, in the form of a program code, which is not specifically limited by the present disclosure.

For example, a number of j*th*-level task distribution units located at j*th*-level among the N levels of task distribution units is the same as a number of level-j cache nodes included in a corresponding j*th*-level cache among the N levels of caches, and the j*th*-level task distribution units correspond to the level-j cache nodes one by one, where j is a positive integer less than or equal to N.

For example, the j*th*-level cache includes J level-j cache nodes, where J is a positive integer, so that a number of level-j task distribution units located at the j*th-* level is also J, the J level-j task distribution units correspond to level-j cache nodes one by one, and each level-j task distribution unit manages the corresponding level-j cache node.

For example, the Nth-level cache includes one level-N cache node, and a number of N*th*-level task distribution units located at level N among the N levels of task distribution units is also 1, and the N*th*-level task distribution unit manages the level-N cache node.

For example, a number of level j thread groups located at j*th*-level among the N levels of thread groups is the same as a number of level-j cache nodes included in a corresponding j*th*-level cache among the N levels of caches and the level j thread groups correspond to the level-j cache nodes one by one, and threads included in each level-j thread group share the corresponding level-j cache node to cache data.

For example, the j*th*-level cache includes J level-j cache nodes, and the number of j*th*-level thread groups is also J, and the j*th*-level thread groups correspond to J level-j cache nodes one by one. For example, threads included in level-j thread group 1 among J level-j thread groups can share corresponding level-j cache nodes (such as level-j cache nodes 1) among J level-j cache nodes to cache data or transmit data.

For example, the level-N thread group described here is a thread group executed within one operation cycle, for example, a thread group that is executed at one operation moment. According to different computing tasks, the computing tasks can be divided into multiple level-N thread groups and subjected to time sharing execution within different operation cycles.

For example, a level-N thread group includes 256 threads, the 256 threads can be further divided into multiple level-(N-1) thread groups, and each level-(N-1) thread group can be further divided into multiple level-(N-2) thread groups. Finally, the number of threads included in each level-1 thread group is determined by the number of tasks executable by the computing unit concurrently, so that the number of threads included in the level-N thread group is determined by the number of tasks executable by each computing unit concurrently and the total number of computing units (or level-1 cache nodes). For example, the number of threads included in the level-N thread group is the product of the number of tasks executable by each computing unit concurrently and the total number of computing units (or level-1 cache nodes).

For example, the N*th*-level task distribution unit located at N*th* level among the N levels of task distribution units is configured to split a total task used for the matrix computation into P1 first tasks and respectively distribute the P1 first tasks to P1 level-N thread groups for time sharing execution, and P1 is a positive integer. For example, each first task is executed by one corresponding level-N thread group.

For example, the number of P1 may be determined according to the total number of threads included in the level-N thread group and the data volume of the total task. For example, taking the input matrix A, the input matrix B, and the output matrices C and C' with sizes of 256×256 and precision of INT8 (the data volume is 1 byte) to implement the matrix multiplication and addition computation (C'=C+A×B) as an example, the total number of threads included in the level-N thread group is assumed to be 64×4=256, for example, there are a total of 64 level-1 cache nodes, each computing unit can execute 4 tasks concurrently, then P1=256×256/256=256.

For example, in some embodiments, the electronic device is configured to execute a first task corresponding to one level-N thread group within one operation cycle.

For example, in this embodiment, all computing units can be uniformly scheduled to execute the same first task in one operation cycle. For example, P1 first tasks can be executed in time-sharing order.

For example, in other embodiments, the electronic device is configured to read parameters of an input matrix required for executing a plurality of first tasks among the P1 first tasks into the level-N cache node at one time, and schedule the plurality of computing units to finish executing the plurality of first tasks within a plurality of operation cycles.

For example, in this embodiment, the various computing units can be separately scheduled and independently controlled to execute the plurality of first tasks out of order by switching threads. For example, according to the size of a storage space, for example, a storage space capable of storing task information of D first tasks (D is a positive integer greater than 1), the task information including positions and coordinates of the parameters required for computation of each first task in the input matrix, the parameters of the input matrix required for the D first tasks can be read into the level-N cache node at one time, and each computing unit can decide which first task to execute at present according to whether the input data required for computation is ready. For example, in this embodiment, instead of executing a plurality of level-N thread groups at the same time within one operation cycle, each computing unit can be independently controlled to execute the same or different first tasks within one operation cycle, as long as the D first tasks are executed as simultaneously as possible after multiple operation cycles.

For example, the N*th*-level task distribution unit is further configured to select at least one first task, split each first task into P2 second tasks to obtain P2 level-(N-1) thread groups split from a level-N thread group corresponding to each first task, and distribute the P2 level-(N-1) thread groups to P2 (N-1)*th*-level task distribution units, where P2 is a number of level-(N-1) cache nodes.

For example, N levels of task distribution units can split the total task used for the matrix computation into P1 first tasks, and select one or more first tasks to be split. For each first task, the first task is split into P2 second tasks, that is, the level-N thread group corresponding to the first task is split into P2 level-(N-1) thread groups, and the P2 level-(N-1) thread groups are distributed to P2 (N-1)*th*-level task distribution units.

For example, distributing the P2 level-(N-1) thread groups to P2 (N-1)*th*-level task distribution units may include distributing the task information of the split second tasks, such as positions and coordinates of the parameters, required for computation of various second tasks, in the input matrix, to the corresponding second level task distribution units and storing the task information.

For example, the number of the first tasks selected to be split can be determined according to the size of the storage space for the task information of the second tasks that can be stored by the second level task distribution units. For example, if task information of only P2 second tasks can be stored, then one first task can be split, and if multiple groups of task information of P2 second tasks can be stored, then multiple first tasks can be split.

For example, each k*th*-level task distribution unit is configured to split the received k-level thread group distributed by a (k+1)*th*-level task distribution unit into P3 (k-1)-level thread groups and distribute the P3 (k-1)-level thread groups to corresponding P3 (k-1)*th*-level task distribution units. For example, P3 is a number of (k-1)-level cache nodes sharing one k-level cache node, and corresponding P3 (k-1)*th*-level task distribution units are P3 (k-1)*th*-level task distribution units corresponding to P3 (k-1)-level cache nodes sharing k-level cache nodes corresponding to kth-level task distribution units. Here, k is a positive integer greater than 1 and less than N.

For example, each first level task distribution unit is configured to distribute the received level-1 thread group to the corresponding level-1 cache node to execute a matrix computation task by using the computing unit corresponding to the level-1 cache node, for example, to execute specific multiplication computation or multiplication and addition computation by using the operation module in the computing unit corresponding to the level-1 cache node.

For example, a number of threads included in the level-N thread group is determined by a number of the level-1 cache nodes and a number of tasks executable by each computing unit in parallel; a total number of threads included in each k-level thread group is equal to a sum of numbers of threads included in P3 (k-1)-level thread groups; and a total number of threads included in each level-1 thread group is equal to the number of tasks executable by each computing unit in parallel.

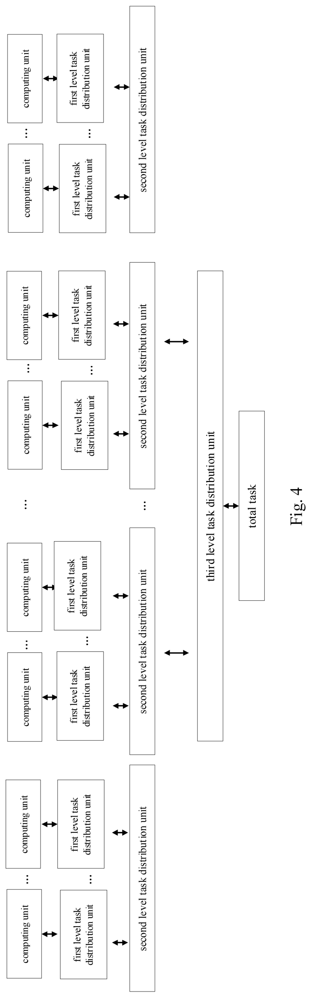

Fig. 4 is a schematic block diagram of N levels of task distribution units provided by at least one embodiment of the present disclosure.

Fig. 4 shows a structure of corresponding N levels of task distribution units when N=3, that is, when a cache structure includes 3 levels of caches. Of course, the present disclosure is not limited to this, and a structural relationship when N takes other values is similar, which is omitted here.

For example, as shown in Fig. 4, the third level task distribution unit corresponds to the level-3 cache, the number of the third level task distribution unit is 1 and the third level task distribution unit corresponds to the level-3 cache node, and the third level task distribution unit is configured to split the total task used for matrix computation into P1 first tasks and distribute the P1 first tasks to P1 level-3 thread groups for time sharing execution. For example, as mentioned above, the P1 first tasks may be executed sequentially in different operation cycles, or the P1 first tasks may be executed out of order by switching threads, which is not specifically limited by the present disclosure.

For example, the third level task distribution unit is further configured to select at least one first task, for example, select one or more or P1 first tasks, split each first task into P2 second tasks to obtain P2 level-2 thread groups obtained by splitting the level-3 thread group corresponding to each first task, and distribute the P2 level-2 thread groups to P2 second level task distribution units.

For example, a number of the second level task distribution units is the same as a number of the level-2 cache nodes, and the second level task distribution units correspond to the level-2 cache nodes one by one; and a number of the first level task distribution units is the same as a number of the level-1 cache nodes, and the first level task distribution units correspond to the level-1 cache nodes one by one.

For example, each second level task distribution unit is configured to split the received level-2 thread group distributed by the third level task distribution unit into P3 level-1 thread groups and distribute the P3 level-1 thread groups to corresponding P3 first level task distribution units.

For example, with respect to the second level task distribution unit 1, the second level task distribution unit 1 corresponds to the level-2 cache node 1 and the level-2 cache node 1 is shared by P3 level-1 cache nodes, so that the second level task distribution unit 1 is configured to distribute the split P3 level-1 thread groups to P3 first level task distribution units corresponding to the P3 level-1 cache nodes.

For example, each first level task distribution unit is configured to distribute the received level-1 thread group to the corresponding level-1 cache node to execute a specific matrix computation task.

For example, in one embodiment, still taking the input matrix A, the input matrix B, and the output matrices C and C' with sizes of 256×256 and precision of INT8 (the data volume is 1 byte) to implement the matrix multiplication and addition computation (C'=C+A×B) as an example,

For example, a total of 64 level-1 cache nodes are provided in the cache structure, every 4 level-1 cache nodes share one level-2 cache node, and 16 level-2 cache nodes share one level-3 cache node.

Therefore, the level-1 thread group includes 4 threads; the level-2 thread group includes 4×4=16 threads; and the level-3 thread group includes 4×4×16=256 threads.

The size of the output matrix C is 256×256 (256 rows × 256 columns), which can be divided into 256×256/256=256 level-3 thread groups. Therefore, each level-3 thread group can implement the computation of C'(16×16) = C(16×16)+A(16×256)×B(256×16), each level-2 thread group obtained by splitting one level-3 thread group can implement the computation of C'(4×4) = C(4×4) + A(4×256)×A(256×4), and each level-1 thread group obtained by splitting one level-2 thread group can implement the computation of C'(2×2)=C(2×2)+A(2×256)×B(256×2).

For example, the third level task distribution unit splits the total task calculated by the matrix into 256 first tasks, and the level-3 thread group corresponding to each first task includes 256 threads; moreover, the third level task distribution unit is also configured to split each first task into 16 second tasks (that is, split the 256 threads included in the level-3 thread group into 16 level-2 thread groups, each level-2 thread group including 16 threads), and distribute the 16 level-2 thread groups corresponding to the 16 second tasks to the 16 second level task distribution units.

For example, each second level task distribution unit splits one received level-2 thread group with 16 threads distributed by the third level task distribution unit into 4 level-1 thread groups and distributes the 4 level-1 thread groups to corresponding 4 first level task distribution units. Each first level task distribution unit distributes 4 threads in the received level-1 thread group to the operation module for matrix computation.

For example, if each computing unit has the concurrent computing capability of executing C'(2×2)=C(2×2)+A(2×1)×B(1×2) within each operation cycle, then the computation of C'(2×2)=C(2×2)+A(2×256)×B(256×2) needs to be completed in 256 operation cycles. Assuming that all computing units execute operations at the same time, it takes 256 clock cycles for one level-3 thread group to implement the computation of C'(16×16) = C(16×16)+A(16×256)×B(256×16).

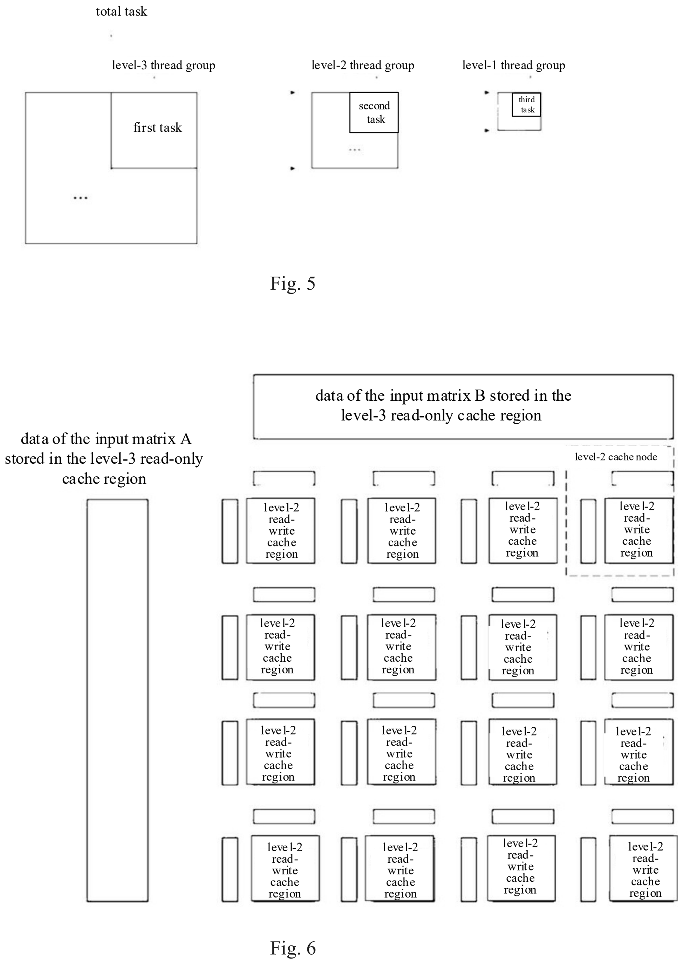

Fig. 5 is a schematic structural diagram of hierarchical thread groups provided by at least one embodiment of the present disclosure.

As shown in Fig. 5, the level-3 task unit is configured to split one total task for matrix computation into a plurality of first tasks, each first task corresponding to one level-3 thread group. According to the foregoing, one level-3 thread group is split into the plurality of level-2 thread groups, for example, each level-2 thread group corresponds to one second task split from the first task. According to the foregoing, each level-2 thread group is split into a plurality of level-1 thread groups, for example, each level-1 thread group corresponds to one third task split from the second task.

Due to the hierarchical distribution of tasks, this method can well utilize the correlation between parameters to enable tasks to be localized, ensure that tasks with similar parameter positions are divided into one thread group for execution as much as possible and share the same cache node, and closely connects the tasks related to the next level cache node hung under the cache node, so as to realize data reuse as much as possible, increase the reuse rate of cache data, reduce the number of times of reading data from the external memory, reduce the cache capacity and reduce the overhead of cache hardware resources.

For example, each task distribution unit is configured to split the thread group according to data correlation between the parameters of the input matrix.

For example, for a plurality of level-(j-1) thread groups split according to the data correlation between the parameters of the input matrix, the data cached in the read-only cache region with the read-only permission in the level-j cache node are reusable by a plurality of level-(j-1) caches corresponding to the plurality of level-(j-1) thread groups sharing the level-j cache node.

Fig. 6 is a schematic diagram of a thread group splitting relationship provided by an embodiment of the present disclosure.

As shown in Fig. 6, a gray long-bar rectangle represents data of the input matrix A stored in the level-3 read-only cache region read from the external memory when executing a certain first task, and a white long-bar rectangle represents data of the input matrix B stored in the level-3 read-only cache region read from the external memory when executing the first task.

For example, it is assumed that a total of 64 level-1 cache nodes are provided in the cache structure, every 4 level-1 cache nodes share one level-2 cache node, and 16 level-2 cache nodes share one level-3 cache node.

For example, in Fig. 6, a dashed box shows one level-2 cache node, and a total of 16 level-2 cache nodes are shown in Fig. 6. Each level-2 cache node includes a level-2 read-write cache region for caching data of the output matrix C, and a level-2 read-only cache region, and the level-2 read-only cache region is used for caching data of the input matrix A required by the cache node (for example, represented by a gray rectangular box located on the left side of each level-2 read-write cache region in Fig. 6) and data of the input matrix B required by the cache node (for example, represented by a white rectangular box located on the upper side of each level-2 read-write cache region shown in Fig. 6).

For example, in the example of Fig. 6, the data of the input matrix A and the input matrix B in the level-3 read-only cache region can be reused by the 16 level-2 read-only cache regions under it. For example, one level-3 thread group is divided into 16 level-2 thread groups. Taking the 16 level-2 thread groups being arranged in a 4×4 matrix manner as an example, data of the input matrix A in each level-2 read-only cache region (a gray rectangular box adjacent to each level-2 read-write cache region) will be reused by 4 horizontal level-2 read-only cache regions, and data of each input matrix B (a white rectangular box adjacent to each level-2 read-write cache region) will be reused by 4 vertical level-2 read-only cache region.

Similarly, the data of the input matrix A and the input matrix B in the level-2 read-only cache region can be reused by 4 level-1 read-only cache region under it, which is omitted here.

Of course, Fig. 6 shows a possible splitting strategy. For example, 16 level-2 read-only cache regions can also be arranged in a form of 1 row × 16 columns, and at this time, the 16 level-2 read-only cache regions can collectively reuse the data of the input matrix A, but not the data of the input matrix B.

In the above-mentioned embodiment, a hierarchical strategy of task distribution can ensure data reuse as much as possible, realize the splitting of thread groups according to data correlation, and reduce the size of data to be cached, the cache capacity and the overhead of caching hardware resources.

For example, the cache structure and the task distribution unit are more significantly optimized for a GPU or a GPGPU. For example, the electronic device may be implemented as a GPGPU or a GPU. Of course, the present disclosure is not limited to this, and the electronic device may be implemented as any electronic device that needs a cache structure, such as a single-core CPU, a multi-core CPU, a GPU, a GPGPU, etc. For example, the central processing unit (CPU) may be an X86 or ARM architecture, and the specific architecture of the electronic device is not specifically limited in the present disclosure.

Of course, it should be noted that the N levels of task distribution units and the N levels thread groups in the electronic device provided by at least one embodiment of the present disclosure are not limited to the cache structure provided by at least one embodiment of the present disclosure, and may also be applied to other hierarchical cache structures, which is not specifically limited by the present disclosure.

Furthermore, although the present disclosure makes various references to certain units in the system according to the embodiments of the present disclosure, any number of different units may be used and operated on the client side and/or server side. The units are merely illustrative, and different aspects of the system and method may employ different units.

A person of ordinary skill in the art may understand that all or part of the steps in the foregoing methods may be implemented by instructing relevant hardware through a computer program, and the program may be stored in a computer-readable storage medium, such as a read-only memory, a magnetic disk, or an optical disk. Optionally, all or part of the steps of the foregoing embodiments may also be implemented using one or more integrated circuits. Correspondingly, each module/unit in the foregoing embodiments may be implemented in the form of hardware, or may be implemented in the form of a software functional module. The present disclosure is not limited to any specific combination of hardware and software.

Unless otherwise defined, all terms used herein have the same meaning as commonly understood by a person of ordinary skill in the art to which the present disclosure belongs. It should also be understood that terms such as those defined in ordinary dictionaries should be interpreted as having meanings consistent with their meanings in the context of the relevant technology, and should not be interpreted in an idealized or overly formalized sense unless explicitly defined as such herein.

The above is a description of the present disclosure and should not be construed as a limitation thereof. Although several exemplary embodiments of the present disclosure have been described, a person skilled in the art will readily understand that many modifications may be made to the exemplary embodiments without departing from the novel teachings and advantages of the present disclosure. Therefore, all such modifications are intended to be included within the scope of the present disclosure as defined by the appended claims. It should be understood that the above is a description of the present disclosure and should not be construed as being limited to the specifically disclosed embodiments, and modifications to the disclosed embodiments and other embodiments are intended to be included within the scope of the appended claims. The present disclosure is defined by the appended claims and their equivalents.

## Claims

1. A cache structure, used for matrix computation, wherein the cache structure comprises N levels of caches,
an ith-level cache among the N levels of caches comprises at least one level-i cache node, and each level-i cache node comprises a level-i read-only cache region with a read-only permission and a level-i read-write cache region with a read-write permission;
every a plurality of level-i cache nodes share one level-(i+1) cache node, and all level-(N-1) cache nodes share one level-N cache node comprised in an Nth-level cache among the N levels of caches, wherein the level-N cache node comprises a level-N read-only cache region with a read-only permission and a level-N read-write cache region with a read-write permission;
the Nth-level cache is electrically connected to an external memory, and each level-1 cache node is electrically connected to a corresponding computing unit;
a read-only cache region with the read-only permission in the N levels of caches is used for caching an input matrix as a computation input parameter in the matrix computation, and transmitting the input matrix between the external memory and a plurality of computing units,
a read-write cache region with the read-write permission in the N levels of caches is used for caching an output matrix as a computation output parameter in the matrix computation, and transmitting the output matrix between the external memory and the plurality of computing units,
wherein N is a positive integer greater than 1, and i is any positive integer between 1 and N-1.

2. The cache structure according to claim 1, wherein each computing unit comprises an operation module and a register array,
the register array of each computing unit is used for storing a part of parameters in the input matrix and a part of parameters in the output matrix; and
the operation module of each computing unit comprises a plurality of multipliers and/or multiply-adders which are used for performing multiplication computation and/or multiplication and addition computation in parallel.

3. The cache structure according to claim 1 or 2, wherein the matrix computation comprises matrix multiplication computation and/or matrix multiplication and addition computation.

4. The cache structure according to any one of claims 1-3, wherein
the input matrix as the computation input parameter is read into a register array in a corresponding computing unit through a read-only cache path composed of read-only cache regions with the read-only permission in the N levels of caches, and
the output matrix as the computation output parameter is read into a register array in a corresponding computing unit through a read-write cache path composed of read-write cache regions with the read-write permission in the N levels of caches, an updated output matrix is obtained after computation by an operation module in the corresponding computing unit, and the updated output matrix is written back from the corresponding computing unit to the external memory or a read-write cache region of any level of cache through the read-write cache path.

5. The cache structure according to claim 4, wherein in response to N being 3,
the read-only cache path comprises a read-only cache region in a level-1 cache node corresponding to the corresponding computing unit, a read-only cache region in a level-2 cache node electrically connected to the level-1 cache node, and a read-only cache region in a level-3 cache node; and
the read-write cache path comprises a read-write cache region in the level-1 cache node corresponding to the corresponding computing unit, a read-write cache region in the level-2 cache node electrically connected to the level-1 cache node, and a read-write cache region in the level-3 cache node.

6. The cache structure according to any one of claims 1-5, wherein the external memory is a dynamic random-access memory.

7. An electronic device, comprising the cache structure according to any one of claims 1-6.

8. The electronic device according to claim 7, wherein the electronic device comprises N levels of task distribution units corresponding to the N levels of caches one by one and N levels of thread groups corresponding to the N levels of caches one by one,
each level of task distribution units comprises at least one task distribution unit, and each level of thread groups comprises at least one thread group,
a number of j*th*-level task distribution units located at a j*th*-level among the N levels of task distribution units is the same as a number of level-j cache nodes comprised in a corresponding j*th*-level cache among the N levels of caches, and the j*th*-level task distribution units correspond to the level-j cache nodes one by one,
a number of level-j thread groups located at a j*th*-level among the N levels of thread groups is the same as the number of level-j cache nodes comprised in the corresponding j*th*-level cache among the N levels of caches, and the level-j thread groups correspond to the level-j cache nodes one by one, and threads comprised in each level-j thread group share a corresponding level-j cache node to cache data,
wherein j is a positive integer less than or equal to N.

9. The electronic device according to claim 8, wherein a number of N*th*-level task distribution unit located at an N*th*-level among the N levels of task distribution units is 1, and the N*th*-level task distribution unit is configured to split a total task used for the matrix computation into P1 first tasks and respectively distribute the P1 first tasks to P1 level-N thread groups for time sharing execution, and P1 is a positive integer.

10. The electronic device according to claim 9, wherein the electronic device is configured to execute a first task corresponding to one level-N thread group within one operation cycle.

11. The electronic device according to claim 9, wherein the electronic device is configured to:
read parameters of an input matrix required for executing a plurality of first tasks among the P1 first tasks to the level-N cache nodes at one time, and
schedule the plurality of computing units to finish executing the plurality of first tasks within a plurality of operation cycles.

12. The electronic device according to any one of claims 9-11, wherein the N*th*-level task distribution unit is further configured to select at least one first task, split each first task into P2 second tasks to obtain P2 level-(N-1) thread groups split from a level-N thread group corresponding to each first task, and distribute the P2 level-(N-1) thread groups to P2 (N-1)*th-*level task distribution units,
wherein P2 is a number of level-(N-1) cache nodes.

13. The electronic device according to any one of claims 9-12, wherein each kth-level task distribution unit is configured to split a received level-k thread group distributed by a (k+1)*th*-level task distribution unit into P3 level-(k-1) thread groups and distribute the P3 level-(k-1) thread groups to corresponding P3 (k-1)*th*-level task distribution units,
wherein P3 is a number of level-(k-1) cache nodes sharing one level-k cache node, the corresponding P3 (k-1)*th*-level task distribution units are P3 (k-1)*th*-level task distribution units corresponding to P3 level-(k-1) cache nodes one by one, and the P3 level-(k-1) cache nodes share a level-k cache node corresponding to the k*th*-level task distribution unit,
wherein k is a positive integer greater than 1 and less than N.

14. The electronic device according to any one of claims 8-13, wherein each first level task distribution unit is configured to distribute a received level-1 thread group to a corresponding level-1 cache node to execute a matrix computation task by using a computing unit corresponding to the corresponding level-1 cache node.

15. The electronic device according to claim 13 or 14, wherein a number of threads comprised in the level-N thread group is determined by a number of level-1 cache nodes and a number of tasks executable by each computing unit in parallel;
a total number of threads comprised in each level-k thread group is equal to a sum of numbers of threads comprised in P3 level-(k-1) thread groups; and
a total number of threads comprised in each level-1 thread group is equal to the number of tasks executable by the computing unit in parallel.

16. The electronic device according to any one of claims 8-15, wherein each task distribution unit is configured to split a thread group according to data correlation between parameters of the input matrix.

17. The electronic device according to claim 16, wherein for a plurality of level-(j-1) thread groups obtained by splitting according to the data correlation between the parameters of the input matrix, parameters of the input matrix cached in a read-only cache region with the read-only permission in a level-j cache node are able to reuse by a plurality of level-(j-1) cache nodes, and the plurality of level-(j-1) cache nodes share the level-j cache node and correspond to the plurality of level-(j-1) thread groups.
